(19) Europäisches Patentamt / European Patent Office / Office européen des brevets

(11) **EP 4 488 892 B1**

(12) **EUROPEAN PATENT SPECIFICATION**

(45) Date of publication and mention
of the grant of the patent:
**14.01.2026  Bulletin 2026/03**

(51) International Patent Classification (IPC):
**G06N 20/10** *(2019.01)*     *G05B 23/02* *(2006.01)*

(52) Cooperative Patent Classification (CPC):
**G06N 20/10;** G05B 23/0221

(21) Application number: **24183280.7**

(22) Date of filing: **20.06.2024**

(54) **METHODS AND SYSTEMS FOR GRAPH ASSISTED UNSUPERVISED DOMAIN ADAPTATION FOR MACHINE FAULT DIAGNOSIS**

VERFAHREN UND SYSTEME ZUR GRAPHUNTERSTÜTZTEN UNÜBERWACHTEN DOMÄNENANPASSUNG ZUR MASCHINENFEHLERDIAGNOSE

PROCÉDÉS ET SYSTÈMES D'ADAPTATION DE DOMAINE NON SUPERVISÉE ASSISTÉE PAR GRAPHE POUR DIAGNOSTIC DE DÉFAILLANCE DE MACHINE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **04.07.2023  IN 202321044922**

(43) Date of publication of application:
**08.01.2025  Bulletin 2025/02**

(73) Proprietor: **Tata Consultancy Services Limited**
**Maharashtra (IN)**

(72) Inventors:
• **PATTNAIK, Naibedya**
  560066 Bangalore - Karnataka (IN)
• **KUMAR, Kriti**
  560066 Bangalore - Karnataka (IN)
• **CHANDRA MARISWAMY, Girish**
  560066 Bangalore - Karnataka (IN)
• **KUMAR ACHANNA, Anil**
  560066 Bangalore - Karnataka (IN)

(74) Representative: **Goddar, Heinz J.**
**Boehmert & Boehmert**
**Anwaltspartnerschaft mbB**
**Pettenkoferstrasse 22**
**80336 München (DE)**

(56) References cited:
• **DING ZHENGMING ET AL: "Graph Adaptive Knowledge Transfer for Unsupervised Domain Adaptation", 9 October 2018, 20181009, PAGE(S) 36 - 52, XP047635908**
• **LI WENZHENG ET AL: "Transfer EEG Emotion Recognition by Combining Semi-Supervised Regression with Bipartite Graph Label Propagation", SYSTEMS (BASEL), vol. 10, no. 4, 29 July 2022 (2022-07-29), Basel, pages 111, XP093227880, ISSN: 2079-8954, DOI: 10.3390/ systems10040111**
• **SCHWENDEMANN SEBASTIAN ET AL: "Bearing fault diagnosis with intermediate domain based Layered Maximum Mean Discrepancy: A new transfer learning approach", ENGINEERING APPLICATIONS OF ARTIFICIAL INTELLIGENCE, PINERIDGE PRESS, SWANSEA, GB, vol. 105, 11 August 2021 (2021-08-11), XP086779624, ISSN: 0952-1976, [retrieved on 20210811], DOI: 10.1016/ J.ENGAPPAI.2021.104415**
• **PATTNAIK NAIBEDYA ET AL: "Graph Assisted Unsupervised Domain Adaptation for Machine Fault Diagnosis", 2023 31ST EUROPEAN SIGNAL PROCESSING CONFERENCE (EUSIPCO), EURASIP, 4 September 2023 (2023-09-04), pages 1733 - 1737, XP034455932, DOI: 10.23919/EUSIPCO58844.2023.10289778**

## Description

TECHNICAL FIELD

The disclosure herein generally relates to an unsupervised domain adaptation, and, more particularly, to methods and systems for graph assisted unsupervised domain adaptation for machine fault diagnosis.

BACKGROUND

Unsupervised Domain adaptation (UDA) has become an emerging technology for many useful applications such as a machine fault diagnosis. The UDA leverages knowledge learned from labeled data in a source domain to build an effective classifier for an unlabeled data in a target domain, given that the source and target data have different underlying distributions. Classical data-driven machine learning algorithms for machine diagnosis assume that the training (source) and test (target) data follow the same data distribution. However, in practical industrial scenario, such assumption does not always hold as machine data from both domains are significantly different due to different working conditions, sampling frequency, location of sensor placement, etc. Additionally, for machine fault diagnosis, access to labeled data of every machine is not always available as manual labelling is time consuming and inducing faults in machine is economically not viable. Moreover, limited data is available for training. So, knowledge transfer between different but related machines can be beneficial.

Most of the existing techniques aim to address a marginal distribution discrepancy aspect alone, ignoring a conditional distribution discrepancy that may exist between the two domains. In order to achieve good adaptation performance, both the marginal and conditional distributions of the source and target data need to be aligned. The problem becomes challenging when the data is limited, and no labels are available for the target domain data.

Further, existing graph-based domain adaptation work focuses on jointly optimizing the domain invariant feature learning by a divergence loss and label propagation loss over a fixed graph which is obtained by augmenting source and target domain data, to learn the labels of the target domain data. The labels are considered as graph signals which are projected onto the graph. Using the known source labels, the target domain labels are predicted by label propagation over this fixed graph. When the domain discrepancy is less, the fixed graph has edge connectivity between source and target nodes which eventually helps in label propagation. However, when the domain discrepancy between the source and target domain is large, then the fixed graph results in two disjoint sub-graphs for source and target data respectively, with no edge connectivity between the source and target nodes. Hence, the label propagation will not be able to estimate the labels of the target domain data.

Li Wenzheng ET AL: "Transfer EEG Emotion Recognition by Combining Semi-Supervised Regression with Bipartite Graph Label Propagation" discloses individual differences often appear in electroencephalography (EEG) data collected from different subjects due to its weak, nonstationary and low signal-to-noise ratio properties. This causes many machine learning methods to have poor generalization performance because the independent identically distributed assumption is no longer valid in cross-subject EEG data. To this end, transfer learning has been introduced to alleviate the data distribution difference between subjects. However, most of the existing methods have focused only on domain adaptation and failed to achieve effective collaboration with label estimation. In this paper, an EEG feature transfer method combined with semi-supervised regression and bipartite graph label propagation (TSRBG) is proposed to realize the unified joint optimization of EEG feature distribution alignment and semi-supervised joint label estimation. Through the cross-subject emotion recognition experiments on the SEED-IV data set, the results show that (1) TSRBG has significantly better recognition performance in comparison with the state-of-the-art models; (2) the EEG feature distribution differences between subjects are significantly minimized in the learned shared subspace, indicating the effectiveness of domain adaptation; (3) the key EEG frequency bands and channels for cross-subject EEG emotion recognition are achieved by investigating the learned subspace, which provides more insights into the study of EEG emotion activation patterns (Abstract).

DING ZHENGMING ET AL: "Graph Adaptive Knowledge Transfer for Unsupervised Domain Adaptation" discloses unsupervised domain adaptation has caught appealing attentions as it facilitates the unlabeled target learning by borrowing existing well-established source domain knowledge. Recent practice on domain adaptation manages to extract effective features by incorporating the pseudo labels for the target domain to better solve cross-domain distribution divergences. However, existing approaches separate target label optimization and domain-invariant feature learning as different steps. To address that issue, we develop a novel Graph Adaptive Knowledge Transfer (GAKT) model to jointly optimize target labels and domain-free features in a unified framework. Specifically, semi-supervised knowledge adaptation and label propagation on target data are coupled to benefit each other, and hence the marginal and conditional disparities across different domains will be better alleviated. Experimental evaluation on two cross-domain visual datasets demonstrates the effectiveness of our designed approach on facilitating the unlabeled target task learning, compared to the state-of-the-art domain adaptation approaches (Abstract).

SUMMARY

Embodiments of the present disclosure present technological improvements as solutions to one or more of the above-mentioned technical problems recognized by the inventors in conventional systems.

In an aspect, a processor-implemented method for graph assisted unsupervised domain adaptation for machine fault diagnosis is provided. The invention is set out in the appended set of claims.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 is an exemplary block diagram of a system for graph assisted unsupervised domain adaptation for machine fault diagnosis, in accordance with some embodiments of the present disclosure.

FIG. 2 is an exemplary block diagram illustrating a graph assisted unsupervised domain adaptation for machine fault diagnosis, in accordance with some embodiments of the present disclosure.

FIGS. 3A and 3B illustrate exemplary flow diagrams of a processor-implemented method for graph assisted unsupervised domain adaptation for machine fault diagnosis, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the invention as defined by the appended claims

Classical machine learning algorithms assume that the training and test data follow the same data distribution. However, in practice, this assumption does not always hold, which leads to deterioration in their performance. Interestingly, Domain Adaptation (DA) has emerged as one of the upcoming techniques to tackle this issue, where the training (source) and test (target) data can be from different distributions. DA relies on leveraging the information learned from well-studied source domain to improve the classification performance on the target domain. According to the availability of label information in the target domain, the DA can be categorized as Unsupervised DA (UDA) where the target domain is completely unlabeled, and semi-supervised DA (SDA) where the target domain has limited labels.

Among all the existing DA techniques, divergence and adversarial learning-based techniques have been successfully applied in different applications. Divergence based DA techniques map instances from both source and target domains to a common feature space to learn domain invariant features. However, they fail to perform when a large distribution discrepancy exists between the two domains.

Adversarial learning based DA methods are able to handle such a scenario, as they learn data translation between source and target domains by training a generator and discriminator network. However, these techniques do not guarantee that class discriminability is preserved during the data translation. Also, they require massive data for training, which may not be always available in many practical application scenarios.

Apart from the existing techniques mentioned above, graph-based techniques have recently been used for DA, as graphs can capture the actual data manifolds effectively. The existing techniques are based on Graph Convolutional Networks (GCN), Graph Signal Processing (GSP), and hybrid techniques that utilize divergence method with graph to learn domain invariant features. An unsupervised Domain Adaptive Network Embedding (DANE) framework has been proposed using GCN and adversarial network that learns transferable embeddings between the source and target domain. Another UDA technique utilized a dual GCN for local and global consistency for feature aggregation. Although popular, these techniques ignore the property of graph structured data while carrying out classification.

To effectively exploit the underlying structure of the data, the concepts of GSP has been utilized for the SDA. The technique is based on aligning the Fourier bases of the graphs constructed using source and target domain data. The spectrum of the labels learned from the source graph is transferred to the target graph for the DA. This work was extended by incorporating graph learning into the optimization formulation that aligns the spectrum of the graphs associated with the source and target data, which resulted in improved performance.

Further, the Graph Adaptive Knowledge Transfer (GAKT) technique referred to above jointly optimizes the domain invariant feature learning by weighted class-wise adaptation loss and label propagation over the graph. A joint graph is employed by augmenting source and target domain data to propagate the labels from known source to unknown target data. When the domain discrepancy is less, the joint (fixed) graph has the edge connectivity between source and target nodes which eventually helps in label propagation. However, when the domain discrepancy between the source and target domains is large, then the joint (fixed) graph results in two disjoint sub-graphs for source and target data respectively, with no edge connectivity between the source and target nodes. Hence, the label propagation will not be able to estimate the labels of the target domain data.

Further, all the aforementioned techniques mainly focus on computer vision related DA applications, but not on time series data for the challenging adaptation scenario of machine fault diagnosis or machine inspection.

In most practical applications of the machine inspection, access to labeled data is difficult, as manual labeling is time consuming and inducing faults in machines is not economically viable. Moreover, labeled data of every machine is not available. Thus, transferring the knowledge learned from labeled data of one machine (source) to a different but related machine (target) is important and required in practice. This is a challenging adaptation scenario since the data distribution of both domains is significantly different due to different working conditions, sampling frequency, location of sensor placement, and so on.

The present disclosure solves the technical problems in the art using a Graph Assisted Unsupervised Domain Adaptation (GA-UDA) technique for the machine fault diagnosis. The GA-UDA technique of the present disclosure for the machine fault diagnosis, carries out the domain adaptation in two stages. In the first stage, a Class-wise maximum mean discrepancy (CMMD) loss is minimized to transform the data from both source and target domains to a shared feature space. In the second stage, the augmented transformed (projected) data from both the source and the target domains are utilized to construct a joint graph. Subsequently, the labels of target domain data are estimated through label propagation over the joint graph. The GA-UDA technique of the present disclosure is similar in nature to the conventional GAKT technique. However, unlike the fixed joint graph considered in GAKT technique, the present disclosure iteratively updates the joint graph using the transformed features of both the source and target domains obtained through the optimization formulation. The GA-UDA technique of the present disclosure helps in addressing significant distribution shift between the two domains.

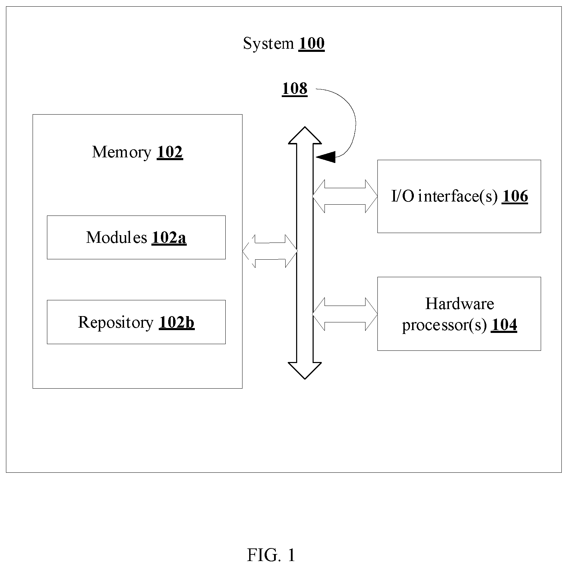

Referring now to the drawings, and more particularly to FIG. 1 through FIG. 3B, where similar reference characters denote corresponding features consistently throughout the figures, there are shown preferred embodiments and these embodiments are described in the context of the following exemplary systems and/or methods.

FIG. 1 is an exemplary block diagram of a system 100 for graph assisted unsupervised domain adaptation for machine fault diagnosis, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

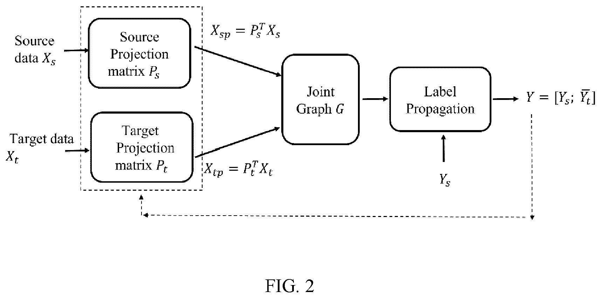

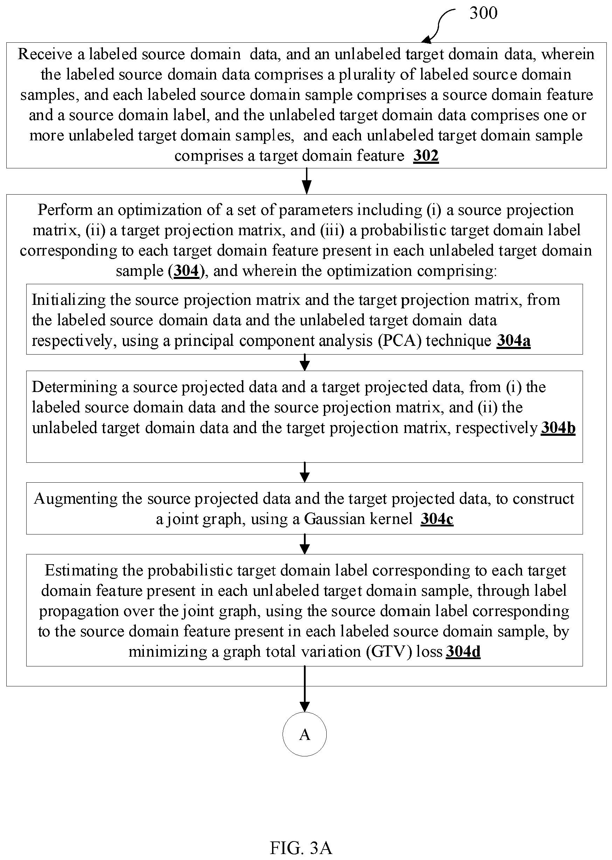

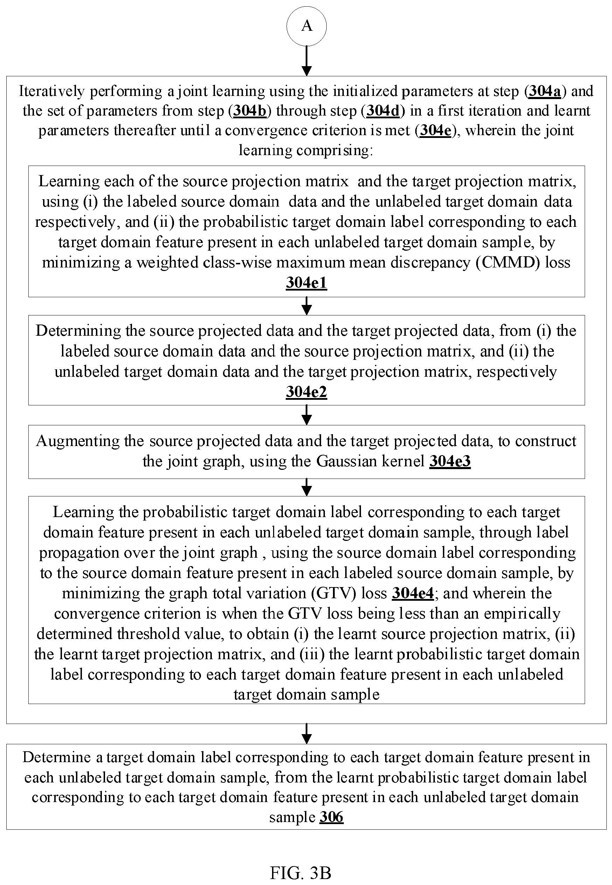

Referring to FIG. 2, components and functionalities of the system 100 are described in accordance with an example embodiment of the present disclosure. For example, FIG. 2 is an exemplary block diagram illustrating a graph assisted unsupervised domain adaptation for machine fault diagnosis, in accordance with some embodiments of the present disclosure. Functions of the components of the system 100 as depicted in FIG. 2 are explained with reference to the description of FIGS. 3A and 3B, which illustrate exemplary flow diagrams of a processor-implemented method 300 for graph assisted unsupervised domain adaptation for machine fault diagnosis, in accordance with some embodiments of the present disclosure. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 302 of the method 300, the one or more hardware processors 104 of the system 100 are configured to receive a labeled source domain data, and an unlabeled target domain data. The labeled source domain data includes a plurality of labeled source domain samples. Each labeled source domain sample includes a source domain feature and a source domain label. In other words each labeled source domain sample is a labeled or annotated sample. The unlabeled target domain data includes one or more unlabeled target domain samples. Each unlabeled target domain sample comprises a target domain feature. In other words, each unlabeled target domain sample includes only the features for which the labels or classes are (fault labels or fault classes) to be predicted.

Hence, the unlabeled target domain data is associated with a machine whose faults are to be diagnosed and the labeled source domain data is associated with the similar machine. Specifically, in an embodiment, the labeled source domain data and the unlabeled target domain data are from different but similar or related machines such as machines with different working conditions, different sampling frequencies, different sensor placements, with same or similar fault types, sensors, and so on. The source domain feature present in each labeled source domain sample and the target domain feature present in each unlabeled target domain sample are obtained from a raw sample data collected from one or more sensors present in the machine whose faults are to be diagnosed. For example, the source domain features, and the target domain features for the machine includes a root mean square (RMS) value, a variance, a data peak value, a kurtosis value, a peak-to peak time-domain value, and so on.

Each of the source domain label associated with each source domain feature, and each of the target domain label associated with each target domain feature, are part of a plurality of predefined labels. Here the plurality of predefined labels means the annotated labels or the classes through which the machine fault types are defined. Thus, the labeled source domain data and the unlabeled target domain data are associated with a same feature space (the source domain feature and the target domain feature) and a same label space or a class space (the plurality of predefined labels).

Let the labeled source domain S data be expressed as $\{X_s, Y_s\} = \{(x_{s_1}, y_{s_1}), \ldots, (x_{s_{n_s}}, y_{s_{n_s}})\}$, where $n_s$ denotes a number of a plurality of labeled source domain samples, $X_s \in R^{m \times n_s}$ denotes a list of source domain features $\{x_{s_1}, \ldots, x_{s_{n_s}}\}$ and each source domain feature is of m dimensions. $Y_s \in R^{n_s \times C}$ is the corresponding one-hot encoded labels ($\{y_{s_1}, \ldots, y_{s_{n_s}}\}$ (source domain labels) with C number of classes (the plurality of predefined labels). Similarly, the unlabeled target domain T data is expressed as $\{X_t\} = \{x_{t_1}, \ldots, x_{t_{n_t}}\}$, where $n_t$ denotes a number of the one or more unlabeled target domain samples, $X_t \in R^{m \times n_t}$ denotes a list of target domain features and each target domain feature is of m dimensions. Given that the distribution discrepancy exists between S and T, the task is to predict the labels ( $\{Y_t\} = \{y_{t_1}, \ldots, y_{t_{n_t}}\}$ ), of the target domain data $X_t$ assuming the feature and label space to be the same across both the source and target domains.

Class-wise Maximum Mean Discrepancy: A Maximum Mean Discrepancy (MMD) is one of the popular techniques used to address the domain discrepancy between the source S and target T domains. The MMD computes a deviation of sample means of two domains in the projected space. More formally, the MMD loss $C_1$ is mathematically expressed as in equation 1:

$$C_1(P_s, P_t) = \left\| \frac{1}{n_s} \sum_{i=1}^{n_s} P_s^T x_{s_i} - \frac{1}{n_t} \sum_{j=1}^{n_t} P_t^T x_{t_j} \right\|_2^2$$

$$= \left\| \frac{P_s^T X_s \mathbf{1}_{n_s}}{n_s} - \frac{P_t^T X_t \mathbf{1}_{n_t}}{n_t} \right\|_2^2 \qquad \text{---------------- (1)}$$

Where $P_s \in R^{m \times k}$ and $P_t \in R^{m \times k}$ are two projection matrices with $k < m$, $x_{s_i}$ and $x_{t_j}$ are the $i^{th}$ and $j^{th}$ sample of $X_s$ and $X_t$ respectively, $\mathbf{1}_{n_s}$ and $\mathbf{1}_{n_t}$ are column vectors of all one of size $n_s$ and $n_t$ respectively. By reducing the deviation (loss), the MMD tries to align the marginal distribution of the source S and target T domain data. However, it fails to address the conditional distribution discrepancy that may exist between the two domains.

To address this, the system 100 and method 300 of the present disclosure uses a Class-wise Maximum Mean Discrepancy (CMMD) which computes the difference between sample means of two similar class data from different domains. This CMMD requires the knowledge of labels for both the domains. Since the target domain T data is unlabeled, in most works, pseudo labels are generated by applying the classifier trained on labeled source domain S data to the target domain T data. In other words, the weighted class-wise maximum mean discrepancy (CMMD) loss is defined as a sum of the class-wise distance between a mean of the projected source domain data $X_{sp}$ and the mean of the projected target domain data $X_{tp}$ associated with similar labels among the plurality of predefined labels. The weighted CMMD loss, $C_2$ is mathematically expressed as in equation 2:

$$C_2(P_s, P_t, \overline{Y}_t) = \sum_{c=1}^{C} \left\| \frac{1}{n_s^c} \sum_{i=1}^{n_s^c} P_s^T x_{s_i}^c - \frac{1}{n_t^c} \sum_{j=1}^{n_t} \bar{y}_t^{(c,j)} P_t^T x_{t_j} \right\|_2^2$$

$$= \left\| P_s^T X_s Y_s N_s - P_t^T X_t \overline{Y}_t N_t \right\|_F^2 \qquad \text{--------(2)}$$

Wherein $\bar{y}_t^{(c,j)}$ denotes the probability of the $j^{th}$ target domain data belonging to the $c^{th}$ class (category) are obtained from the target label predictions (pseudo labels $\overline{Y}_t$), and $\|.\|_F$ is the frobenius norm. $n_s^c$ and $n_t^c$ denote the number of samples in the $c^{th}$ class for source and target domain respectively. $N_s$ and $N_t$ are diagonal matrices of size $C \times C$ with $c^{th}$ diagonal elements as $\frac{1}{n_s^c}$ and $\frac{1}{n_t^c}$ respectively. Here, $n_t^c$ is calculated as $\sum_{j=1}^{n_t} \bar{y}_t^{(c,j)}$.

At step 304 of the method 300, the one or more hardware processors 104 of the system 100 are configured to perform an optimization of a set of parameters including (i) a source projection matrix $P_s$, (ii) a target projection matrix $P_t$, and (iii) a probabilistic target domain label associated with each target domain feature present in each unlabeled target domain sample of the one or more unlabeled target domain sample in the unlabeled target domain T data.

In the present disclosure, as shown in FIG. 2, the source projection matrix $P_s$ and the target projection matrix $P_t$ are learned from the source and target domain data $X_s$ and $X_t$, respectively, by minimizing the weighted CMMD loss as described using equation 2. Then, the projected data from both the domains, called as a source projection data $X_{sp}$ and a target projection data $X_{tp}$ that are represented as $X_{sp} = P_s^T X_s \in R^{k \times n_s}$ and $X_{tp} = P_t^T X_t \in R^{k \times n_t}$ are utilized to construct a joint graph (G) of $n = n_s + n_t$ samples by augmenting $X_{sp}$ and $X_{tp}$ ($X_p = [X_{sp}; X_{tp}]$) using the Gaussian kernel.

The probabilistic target domain labels $\overline{Y}_t$ are estimated through label propagation over the joint graph G.

The optimization of the set of parameters is described in detail through steps 304a through 304e. At step 304a, the source projection matrix $P_s$ and the target projection matrix $P_t$ are initialized in a first iteration of a plurality of iterations, based on the labeled source domain S data and the unlabeled target domain T data respectively, using a principal component analysis (PCA) technique. More specifically, the source projection matrix $P_s$ and the target projection matrix $P_t$ are initialized using the PCA technique over the source and target domain data $X_s$ and $X_t$, respectively.

At step 304b, the source projected data $X_{sp}$ and the target projected data $X_{tp}$, are determined from (i) the labeled source domain S data and the source projection matrix $P_s$ obtained at step 304a, and (ii) the unlabeled target domain T data and the target projection matrix $P_t$ obtained at step 304a, respectively. More specifically, the source projected data $X_{sp}$ is determined by multiplying the labeled source domain S data and the source projection matrix $P_s$. Similarly, the target projected data $X_{tp}$ is determined by multiplying the unlabeled target domain T data and the target projection matrix $P_t$.

At step 304c, the source projected data $X_{sp}$ and the target projected data $X_{tp}$ obtained at step 304b are augmented, to construct the joint graph G, using the Gaussian kernel. A Graph signal processing (GSP) is a method used for signal modeling that involves a graph structure and a graph signal Y residing on a graph structure. The graph structure is represented as $\{V, E, W\}$, where V is the set of vertices and E is the set of edges connecting those vertices with weights specified in the weight matrix W. Given the data $X \in R^{m \times n}$ with m features of $n$ samples, a graph of $n$ vertices can be constructed using $W \in R^{n \times n}$ obtained from Gaussian kernel that is mathematically expressed as in equation 3:

$$W_{ij} = \exp\left(-\left\|x_i - x_j\right\|^2 / 2\sigma^2\right) \qquad \text{-------- (3)}$$

Wherein $\sigma$ is a scaling factor, and $x_i$ and $x_j$ are the feature vectors at $i^{th}$ and $j^{th}$ vertices of the graph G, respectively. One of the important matrices associated with graphs is the graph Laplacian. The un-normalized graph Laplacian is expressed as $L = D - W \in R^{n \times n}$ where D is the degree matrix, which is a diagonal matrix whose diagonal entries are expressed as $D_{ii} = \sum_j W_{ij}$. The normalized graph Laplacian is expressed as $L_n = D^{-1/2}(D - W)D^{-1/2}$.

At step 304d, the probabilistic target domain label associated with each target domain feature present in each unlabeled target domain sample, is estimated through label propagation over the joint graph G constructed at step 304c, using the source domain label associated with the source domain feature present in each labeled source domain sample. The probabilistic target domain label associated with each target domain feature present in each unlabeled target domain sample, are referred as pseudo labels ($\overline{Y}_t$) of the target domain $T$ data. The estimation of the probabilistic target domain label associated with each target domain feature is achieved by minimizing a graph total variation (GTV) loss of the joint graph G.

The graph signal $(Y: V \rightarrow R)$ is a function that takes real value at each vertex of the joint graph G. The variation of signal over the underlying graph structure is defined by the Graph Total Variation (GTV), which is mathematically expressed as in equation 4:

$$Y^T L Y = \frac{1}{2} \sum_{i,j=1}^{n} W_{ij}(Y(i) - Y(j))^2 \qquad \text{-------- (4)}$$

Where $Y(i)$ and $Y(j)$ denotes the labels at $i^{th}$ and $j^{th}$ vertices of the joint graph G, respectively.

Most of the applications in GSP involve minimizing the GTV loss to ascertain that the graph signal is in agreement with the underlying graph structure. Thereby ensuring a smooth transition of the signal over the graph. This term has been popularly used for label propagation, where data form the graph structure and labels are considered as the graph signal. If the data residing at the two vertices are similar, minimizing the GTV term enables the labels at those vertices to be similar as well.

At step 304e, a joint learning is iteratively performed using the initialized parameters at step 304a (i.e., the source projection matrix $P_s$ and the target projection matrix $P_t$) and the set of parameters from step 304b through step 304d in a first iteration and learnt parameters obtained thereafter until a convergence criterion is met. The joint learning is explained in detail through steps 304e1 through 304e4.

At step 304e1, each of the source projection matrix $P_s$ and the target projection matrix $P_t$, is learned using (i) the labeled source domain S data and the unlabeled target domain T data, and (ii) and the probabilistic target domain label (obtained at step 304) associated with each target domain feature present in each unlabeled target domain sample. The source projection matrix $P_s$ and the target projection matrix $P_t$, are learned by minimizing a weighted class-wise maximum mean discrepancy (CMMD) loss using equation 2. Note here that the weighted class-wise maximum mean discrepancy (CMMD) loss is employed for learning the source projection matrix $P_s$ and the target projection matrix $P_t$ in the second and subsequent iterations, instead of the PCA technique in the initial or the first iteration.

Taking $P = [P_s, P_t]$, the projections $P_s$ and $P_t$ are learned by minimizing a loss function mathematically expressed as in equation 5:

$$P = \min_{P^T S P = I_k} \left\| P_s^T X_s \, \hat{Y}_s \, \overline{N_s} - P_t^T X_t \hat{Y}_t \overline{N_t} \right\|_F^2 + \alpha \| P_s - P_t \|_{2,1}$$

$$= \min_{P^T S P = I_k} tr(P^T \boldsymbol{T} P) + \alpha \, tr(P^T \boldsymbol{M} P) \qquad\qquad \text{--------- (5)}$$

Where $\hat{Y}_s = [1_{n_s}]$, $\hat{Y}_t = [1_{n_t}, \overline{Y}_t]$, $\overline{N}_s = diag \,(1/n_s, N_s)$ and $\overline{N}_t = diag\, (1/n_t, N_t)$

$$S = \begin{bmatrix} X_s H_s X_s^T, & 0 \\ 0, & X_t H_t X_t^T \end{bmatrix},\ \boldsymbol{M} = \begin{bmatrix} M, & -M \\ -M, & M \end{bmatrix},$$

$$\boldsymbol{T} = \begin{bmatrix} X_s \, \hat{Y}_s \, \overline{N_s} \, \overline{N_s} \, \hat{Y}_s^T X_s^T, & X_s \, \hat{Y}_s \, \overline{N_s} \, \overline{N_t} \, \hat{Y}_t^T X_t^T \\ X_t \, \hat{Y}_t \, \overline{N_t} \, \overline{N_s} \, \hat{Y}_s^T X_s^T, & X_t \, \hat{Y}_t \, \overline{N_t} \, \overline{N_t} \, \hat{Y}_t^T X_t^T \end{bmatrix}.$$

Here, $H_s$ and $H_t$ denote the centering matrices expressed as $I_{n_s} - \frac{1}{n_s} \boldsymbol{I}_{n_s}$ and $I_{n_t} - \frac{1}{n_t} \boldsymbol{I}_{n_t}$ respectively, where $\boldsymbol{I_{n_s}}$ and $\boldsymbol{I_{n_t}}$ are all one matrices of size $n_s$ and $n_t$ respectively. M $\in R^{m \times m}$ is a diagonal matrix whose $i^{th}$ diagonal entry $M_{ii} = 1/\| G_i \|_2$ if $G_i \neq 0$, otherwise $M_{ii} = 0$. $G_i$ is the $i^{th}$ row vector of $P_s$ - $P_t$. While the first term in equation (5) is similar to equation (2), the second term is added to constrain the learned source and target projections to be similar with the help of hyperparameter $\alpha$. Here, $\| . \|_{2,1}$ stands for matrix $l_{2,1}$ norm. The optimization formulation in equation (5) is solved by formulating it as a generalized Eigen-decomposition problem: $(\boldsymbol{T} + \alpha \boldsymbol{M})\gamma = \beta \boldsymbol{S} \gamma$. Here, the eigenvectors ($\gamma_i$) are associated with minimum eigen values ($\beta$). The subspace projections are accordingly updated as P = $[\gamma_0, ..., \gamma_{p-1}]$.

At step 304e2, the source projected data $X_{sp}$ and the target projected data $X_{tp}$, are determined from (i) the labeled source domain S data and the source projection matrix $P_s$ obtained at step 304e1, and (ii) the unlabeled target domain $T$ data and the target projection matrix $P_t$ obtained at step 304e1, respectively, as described at step 304b. Then at step 304e3, the source projected data $X_{sp}$ and the target projected data $X_{tp}$, determined at step 304e2, are augmented, to construct the joint graph G, using the Gaussian kernel as described at step 304c using equation 3.

At step 304e4, the probabilistic target domain label associated with each target domain feature present in each unlabeled target domain sample, are learned through label propagation over the joint graph G obtained at step 304e3, using the source domain label associated with the source domain feature present in each labeled source domain sample, by minimizing the graph total variation (GTV) loss as described at step 304d, using equation 4.

The pseudo labels $\overline{Y}_t$ of the target domain $T$ data are updated through label propagation over the joint graph G by minimizing the graph total variation loss. Considering the augmented label matrix $Y = [Y_s; \overline{Y}_t] \in R^{n \times c}$, where $\overline{Y}_t$ is computed as in equation 6:

$$\min_Y \ tr(Y^T L_n Y) = \min_Y \ tr\left( Y^T \begin{bmatrix} L_{ss}, & L_{st} \\ L_{ts}, & L_{tt} \end{bmatrix} Y \right), \text{ such that } Y \geq 0 \ \text{-------(6)}$$

where $L_n$ is the normalized graph Laplacian for the joint graph G obtained using the augmented projected data $X_p$ from the two domains using the equation 3. Since $L_n$ is symmetric, $L_{st} = L_{ts}^T$, solving the equation 6, results in the following closed form update $\overline{Y}_t = -L_{tt}^{-1} L_{ts} \, Y_s$. Once $\overline{Y}_t$ is computed, $N_t$ is also updated.

The joint learning is iteratively performed through steps 304e1 to 304e4, until the convergence criterion is met. In an embodiment, the convergence criterion is met when the GTV loss is less than an empirically determined threshold value. Once the convergence criterion is met, the joint learning results in obtaining (i) the learnt source projection matrix, (ii) the learnt target projection matrix, and (iii) the learnt probabilistic target domain label associated with each target domain feature present in each unlabeled target domain sample.

At step 306 of the method 300, the one or more hardware processors 104 of the system 100 are configured to determine a target domain label associated with each target domain feature present in each unlabeled target domain sample, from the learnt probabilistic target domain label associated with each target domain feature present in each unlabeled target domain sample. More specifically, the class labels associated with the highest probability in the target predictions ($\overline{Y}_t$), are considered as the final target labels $Y_t$.

Hence the methods and systems of the present disclosure, through GA-UDA technique, iteratively updates the joint graph using the transformed features of both the source and target domains obtained through the optimization formulation. Hence the joint graph obtained is always a complete graph (not like a disjoint graph), and therefore the estimation of labels for the target domain data is always efficient and accurate. The GA-UDA technique of the present disclosure helps in addressing significant distribution shift between the two domains efficiently.

Example scenario:

The bearing fault datasets and the conventional techniques in the art (referred as benchmark methods) are used to analyze the performance of the methods and systems of the present disclosure.

*CWRU Dataset:* This bearing dataset is collected by Case Western Reserve University (CWRU). It contains vibration data captured from the drive and fan end of the machine at a sampling frequency of 12 kHz. It has data for four different loading conditions (0, 1, 2, and 3 Horse Power (Hp)) with rotating speeds of 1797, 1772, 1750, and 1730 rpm, respectively. The data has four classes or fault types (the labels or predefined labels): Normal, Inner-race Fault (IF), Outer-race Fault (OF), and Bearing-race Fault (BF). Here, faults of different sizes (0.007, 0.014, 0.021 inches) are induced using electro-discharge machining (EDM).

*Paderborn Dataset:* This bearing dataset is collected from Paderborn University. It contains vibration and stator current signals collected from a test rig consisting of a drive motor, a torque measurement shaft, the test modules, and a load motor. Data for both real and artificially damaged bearings are available with a sampling frequency of 64 kHz for two rotating speeds (900 and 1500 rpm) and loading torques (0.7 and 0.1 Nm). The data has three classes or fault types (the labels or predefined labels): Normal, Innerrace Fault (IF), and Outer-race Fault (OF). Only the vibration data is considered in this analysis with faults introduced using EDM.

Benchmark methods: The methods and systems of the present disclosure is compared against five state-of-the-art UDA methods for bearing fault diagnosis and the Graph based DA (GAKT) method for the performance evaluation. The UDA methods for bearing fault diagnosis include mapping-based methods like Joint Maximum Mean Discrepancy (JMMD), Multi Kernels Maximum Mean Discrepancy (MK-MMD), CORrelation ALignment (CORAL), and adversarial learning-based methods like Domain Adversarial Neural Network (DANN) and Conditional Domain Adversarial Network (CDAN). They have been successfully used for adaptation between different working conditions of the same machine. In this analysis, they are evaluated for the difficult scenario of adaptation between physically different but related machines for the bearing fault diagnosis. These methods are implemented considering the same deep CNN backbone and bottleneck architecture.

The evaluation considers a challenging adaptation scenario where the source and target data belong to physically different but related machines. Here, adaptation is considered between CWRU and Paderborn datasets for bearing fault detection and classification. Note that the bearing specifications, sampling frequency, and working conditions are different for both datasets, making it a challenging adaptation scenario. CWRU data with 0 Hp motor torque and 0.007 inch fault size, collected from the drive end, and Paderborn data with 900 rpm and 0.7 loading torque have been utilized for the present experimentation. The Paderborn dataset is down sampled to 12 kHz to match the sampling frequency of CWRU dataset. The raw data is pre-processed by taking a sliding window of 1024 length, which results in 351 samples for each dataset. Five relevant time domain features, namely a root mean square (RMS), a variance, a data peak, a kurtosis, and a peak to peak are extracted from the raw data. They are well-studied features for bearing fault diagnosis that carry class discriminative information. For a fair comparison, these features are fed as input to all the methods, and a three-class classification problem is considered: Normal, IF, and OF.

The performance for all the methods is assessed using Accuracy (Acc), Precision (P), Recall (R), and F1 score (F1). To simulate a data limited scenario, experimentation was carried out considering 50 % train-test split. The average results obtained using five randomly generated train-test sets are summarized in the tables, with the best performing method highlighted in bold. Table 1 and 2 provide the classification results for CWRU → Paderborn and Paderborn → CWRU, respectively, where $S \to T$ denotes adaptation from source to the target domain. Note the optimal value of the hyperparameters $\sigma$ and $\alpha$ for the present disclosure are obtained using grid search and are mentioned in the tables.

Table 1

| Method | Acc | P | R | F1 |
|---|---|---|---|---|
| JMMD | 53.86 | 42.29 | 53.86 | 45.3 |
| MK-MMD | 36.25 | 35.57 | 36.25 | 33.42 |
| CORAL | 45.34 | 34.91 | 45.34 | 35.98 |
| DANN | 44.32 | 33.55 | 44.32 | 36.9 |
| CDAN | 44.66 | 31.3 | 44.66 | 34.92 |
| GAKT | 71.88 | 84.78 | 71.88 | 65.54 |

(continued)

| Method | Acc | P | R | F1 |
|---|---|---|---|---|
| Present disclosure ($\sigma$ = 5, $\alpha$ = 2) | 90.9 | 92.93 | 90.9 | 90.67 |

Table 2

| Method | Acc | P | R | F1 |
|---|---|---|---|---|
| JMMD | 76.93 | 76.56 | 76.93 | 73.67 |
| MK-MMD | 82.73 | 88.22 | 82.73 | 81.74 |
| CORAL | 54.66 | 41.63 | 54.66 | 46.21 |
| DANN | 71.02 | 78.7 | 71.02 | 67.07 |
| CDAN | 80.68 | 75.11 | 80.68 | 76.12 |
| GAKT | 66.5 | 49.85 | 66.5 | 55.38 |
| Present disclosure ($\sigma$ = 4, $\alpha$ = 2) | **93.29** | **94.73** | **93.29** | **93.1** |

For the case of *CWRU → Paderborn,* Table 1 shows that the mapping and adversarial learning based DA methods do not perform well for limited data scenarios. Even with domain-specific features as input, they fail to learn discriminative representations from the data. On the other hand, for the *Paderborn → CWRU* case, the performance of these methods is comparatively better. However, for both cases, the methods and systems of the disclosure performs better than all the other benchmark methods. From both Table 1 and 2, it is observed that the present disclosure significantly improves over the GAKT method with ≈ 19 % and 27 % increase in accuracy, respectively. Note the distribution shift between the two domains is significant for the adaptation scenario considered here, where the source and target data are from different machines. In GAKT method, this results in two disjoint sub-graphs associated with the source and target data, respectively. Hence the label propagation over the joint graph is not effective. Unlike the static graph in GAKT, the graph in the present disclosure is updated iteratively using the transformed features learned through the optimization formulation till the convergence is met. This allows the present disclosure to effectively handle the distribution shift between the two domains, thereby providing more reliable adaptation results.

The written description describes the subject matter herein to enable any person skilled in the art to make and use the embodiments.

The embodiments of present disclosure herein address unresolved problem of the Unsupervised Domain Adaptation (UDA), through the Graph Assisted Unsupervised Domain Adaptation (GA-UDA) technique for the machine fault diagnosis. Experimental results also show that the methods and systems of the present disclosure provides superior performance compared to the benchmark methods for the challenging data-limited scenario of adaptation between different but related machines. The experimental results demonstrate the applicability of the present disclosure method effectively and accurately for the domain adaptation.

The application of the machine fault diagnosis is considered to explain the methods and systems of the present disclosure in detail through the Graph Assisted Unsupervised Domain Adaptation (GA-UDA). However, in embodiments not falling under the scope of the claims, GA-UDA can be applied to other application domains such as computer vision domains including an object detection and a face recognition.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

**Claims**

1. A processor-implemented method (300), comprising the steps of:

receiving, via one or more hardware processors (104), a labeled source domain S data $\{X_s, Y_s\}$, and an unlabeled target domain $T$ data $\{X_t\}$, wherein the labeled source domain S data comprising a plurality of labeled source domain samples $\left\{ \left( x_{s_1}, y_{s_1} \right), \dots, \left( x_{s_{n_s}}, y_{s_{n_s}} \right) \right\}$ and each labeled source domain sample comprising a source domain feature and a source domain label, and the unlabeled target domain T data comprising one or more unlabeled target domain samples $\{ x_{t_1}, \dots, x_{t_{n_t}} \}$ and each unlabeled target domain sample comprises a target domain feature (302), wherein the source domain feature present in each labeled source domain sample and the target domain feature present in each unlabeled target domain sample, are obtained from one or more sensors present in a machine whose faults are to be diagnosed, and wherein the labeled source domain S data and the unlabeled target domain $T$ data are received from machines with different working conditions, different sampling frequencies, and different sensor placements;

wherein the labeled source domain S data and the unlabeled target domain T data are associated with a same feature space and a same label space;

performing, via the one or more hardware processors (104), an optimization of a set of parameters including (i) a source projection matrix $P_s$, (ii) a target projection matrix $P_t$, and (iii) a probabilistic target domain label associated with each target domain feature present in each unlabeled target domain sample (304), and wherein the optimization comprising:

(a) initializing the source projection matrix $P_s$ and the target projection matrix $P_t$, from the labeled source domain S data and the unlabeled target domain T data respectively, using a principal component analysis, PCA, technique (304a);

(b) determining a source projected data $X_{sp}$ and a target projected data $X_{tp}$, from (i) the labeled source domain S data and the source projection matrix $P_s$, and (ii) the unlabeled target domain $T$ data and the target projection matrix $P_t$, respectively (304b);

(c) augmenting the source projected data $X_{sp}$ and the target projected data $X_{tp}$, to construct a joint graph G, using a Gaussian kernel (304c);

(d) estimating the probabilistic target domain label associated with each target domain feature present in each unlabeled target domain sample, through a label propagation over the joint graph G, using the source domain label associated with the source domain feature present in each labeled source domain sample, by minimizing a graph total variation, GTV, loss (304d); and

(e) iteratively performing a joint learning using the initialized parameters at step (a) and the set of parameters from step (b) through step (d) in a first iteration and learnt parameters thereafter until a convergence criterion is met (304e), wherein the joint learning comprising:

learning each of the source projection matrix $P_s$ and the target projection matrix $P_t$, using (i) the labeled source domain S data and the unlabeled target domain T data respectively, and (ii) the probabilistic target domain label associated with each target domain feature present in each unlabeled target domain sample, by minimizing a weighted class-wise maximum mean discrepancy, CMMD, loss (304e1); determining the source projected data $X_{sp}$ and the target projected data $X_{tp}$, from (i) the labeled source domain S data and the source projection matrix $P_s$, and (ii) the unlabeled target domain T data and the target projection matrix $P_t$, respectively (304e2); augmenting the source projected data $X_{sp}$ and the target projected data $X_{tp}$, to construct the joint graph G, using the Gaussian kernel (304e3); learning the probabilistic target domain label associated with each target domain feature present in each unlabeled target domain sample, through label propagation over the joint graph G, using the source domain label associated with the source domain feature present in each labeled source domain sample, by minimizing the GTV loss (304e4); and

wherein the convergence criterion is when the GTV loss being less than an empirically determined threshold value, to obtain (i) the learnt source projection matrix $P_s$, (ii) the learnt target projection matrix $P_t$, and (iii) the learnt probabilistic target domain label associated with each target domain feature present in each unlabeled target domain sample; and

determining, via the one or more hardware processors (104), a target domain label associated with each target domain feature present in each unlabeled target domain sample, from the learnt probabilistic target domain label associated with each target domain feature present in each unlabeled target domain sample (306).

2. The processor-implemented method as claimed in claim 1, wherein (i) the source domain label associated with each source domain feature, and (ii) the target domain label associated with each target domain feature, are part of a plurality of predefined labels.

3. The processor-implemented method as claimed in claim 1, wherein minimizing the GTV loss propagates the source domain labels over the joint graph G to estimate the probabilistic target domain labels associated with the target domain T data.

4. A system (100) comprising:

a memory (102) storing instructions; one or more input/output (I/O) interfaces (106); and one or more hardware processors (104) coupled to the memory (102) via the one or more I/O interfaces (106), wherein the one or more hardware processors (104) are configured by the instructions to:

receive a labeled source domain S data $\{X_s, Y_s\}$, and an unlabeled target domain T data $\{X_t\}$, wherein the labeled source domain S data comprising a plurality of labeled source domain samples $\left\{ \left( x_{s_1}, y_{s_1} \right), \dots, \left( x_{s_{n_s}}, y_{s_{n_s}} \right) \right\}$ and each labeled source domain sample comprising a source domain feature and a source domain label, and the unlabeled target domain T data comprising one or more unlabeled target domain samples $\{ x_{t_1}, \dots, x_{t_{n_t}} \}$ and each unlabeled target domain sample comprises a target domain feature, wherein the source domain feature present in each labeled source domain sample and the target domain feature present in each unlabeled target domain sample, are obtained from one or more sensors present in a machine whose faults are to be diagnosed, and wherein the labeled source domain S data and the unlabeled target domain T data are received from machines with different working conditions, different sampling frequencies, and different sensor placements; wherein the labeled source domain S data and the unlabeled target domain T data are associated with a same feature space and a same label space; perform an optimization of a set of parameters including (i) a source projection matrix $P_s$, (ii) a target projection matrix $P_t$, and (iii) a probabilistic target domain label associated with each target domain feature present in each unlabeled target domain sample, and wherein the optimization comprising:

(a) initializing the source projection matrix $P_s$ and the target projection matrix $P_t$, from the labeled source domain S data and the unlabeled target domain T data respectively, using a principal component analysis, PCA, technique; (b) determining a source projected data $X_{sp}$ and a target projected data $X_{tp}$, from (i) the labeled source domain S data and the source projection matrix $P_s$, and (ii) the unlabeled target domain $T$ data and the target projection matrix $P_t$, respectively;

(c) augmenting the source projected data $X_{sp}$ and the target projected data $X_{tp}$, to construct a joint graph G, using a Gaussian kernel;

(d) estimating the probabilistic target domain label associated with each target domain feature present in each unlabeled target domain sample, through label propagation over the joint graph G, using the source domain label associated with the source domain feature in each labeled source domain sample, by minimizing a graph total variation, GTV, loss; and

(e) iteratively performing a joint learning using the initialized parameters at step (a) and the set of parameters from step (b) through step (d) in a first iteration and learnt parameters thereafter until a convergence criterion is met, wherein the joint learning comprising:

learning each of the source projection matrix $P_s$ and the target projection matrix $P_t$ using (i) the labeled source domain S data and the unlabeled target domain T data respectively, and (ii) the probabilistic target domain label associated with each target domain feature present in each unlabeled target domain sample, by minimizing a weighted class-wise maximum mean discrepancy, CMMD, loss;

determining the source projected data $X_{sp}$ and the target projected data $X_{tp}$, from (i) the labeled source domain S data and the source projection matrix $P_s$, and (ii) the unlabeled target domain $T$ data and the target projection matrix $P_t$, respectively;

augmenting the source projected data $X_{sp}$ and the target projected data $X_{tp}$, to construct the joint graph G, using the Gaussian kernel;

learning the probabilistic target domain label associated with each target domain feature present in each unlabeled target domain sample, through label propagation over the joint graph G, using the source domain label associated with the source domain feature present in each labeled source domain sample, by minimizing the GTV loss; and

wherein the convergence criterion is when the GTV loss being less than an empirically determined threshold value, to obtain (i) the learnt source projection matrix $P_s$, (ii) the learnt target projection matrix $P_t$, and (iii) the learnt probabilistic target domain label associated with each target domain feature present in each unlabeled target domain sample; and

determine a target domain label associated with each target domain feature present in each unlabeled target domain sample, from the learnt probabilistic target domain label associated with each target domain feature present in each unlabeled target domain sample.

5. The system as claimed in claim 4, wherein (i) the source domain label associated with each source domain feature, and (ii) the target domain label associated with each target domain feature, are part of a plurality of predefined labels.

6. The system as claimed in claim 4, wherein minimizing GTV loss propagates the source domain labels over the joint graph G to estimate the probabilistic target domain labels associated with the target domain T data.

7. One or more non-transitory machine-readable information storage mediums comprising one or more instructions which when executed by one or more hardware processors cause the one or more hardware processors to perform the steps of:

receiving a labeled source domain S data $\{X_s, Y_s\}$, and an unlabeled target domain $T$ data $\{X_t\}$, wherein the labeled source domain S data comprising a plurality of labeled source domain samples $\left\{\left(x_{s_1}, y_{s_1}\right), \ldots, \left(x_{s_{n_s}}, y_{s_{n_s}}\right)\right\}$ and each labeled source domain sample comprising a source domain feature and a source domain label, and the unlabeled target domain T data comprising one or more unlabeled target domain samples $\{x_{t_1}, \ldots, x_{t_{n_t}}\}$ and each unlabeled target domain sample comprises a target domain feature, wherein the source domain feature present in each labeled source domain sample and the target domain feature present in each unlabeled target domain sample, are obtained from one or more sensors present in a machine whose faults are to be diagnosed, and wherein the labeled source domain S data and the unlabeled target domain $T$ data are received from machines with different working conditions, different sampling frequencies, and different sensor placements; wherein the labeled source domain S data and the unlabeled target domain T data are associated with a same feature space and a same label space;

performing an optimization of a set of parameters including (i) a source projection matrix $P_s$, (ii) a target projection

matrix $P_t$, and (iii) a probabilistic target domain label associated with each target domain feature present in each unlabeled target domain sample, and wherein the optimization comprising:

(a) initializing the source projection matrix $P_s$ and the target projection matrix $P_t$, from the labeled source domain S data and the unlabeled target domain T data respectively, using a principal component analysis, PCA, technique;

(b) determining a source projected data $X_{sp}$ and a target projected data $X_{tp}$, from (i) the labeled source domain S data and the source projection matrix $P_s$, and (ii) the unlabeled target domain $T$ data and the target projection matrix $P_t$, respectively;

(c) augmenting the source projected data $X_{sp}$ and the target projected data $X_{tp}$, to construct a joint graph G, using a Gaussian kernel;

(d) estimating the probabilistic target domain label associated with each target domain feature present in each unlabeled target domain sample, through a label propagation over the joint graph G, using the source domain label associated with the source domain feature present in each labeled source domain sample, by minimizing a graph total variation, GTV, loss; and

(e) iteratively performing a joint learning using the initialized parameters at step (a) and the set of parameters from step (b) through step (d) in a first iteration and learnt parameters thereafter until a convergence criterion is met, wherein the joint learning comprising:

learning each of the source projection matrix $P_s$ and the target projection matrix $P_t$, using (i) the labeled source domain S data and the unlabeled target domain T data respectively, and (ii) the probabilistic target domain label associated with each target domain feature present in each unlabeled target domain sample, by minimizing a weighted class-wise maximum mean discrepancy, CMMD, loss;

determining the source projected data $X_{sp}$ and the target projected data $X_{tp}$, from (i) the labeled source domain S data and the source projection matrix $P_s$, and (ii) the unlabeled target domain $T$ data and the target projection matrix $P_t$, respectively;

augmenting the source projected data $X_{sp}$ and the target projected data $X_{tp}$, to construct the joint graph G, using the Gaussian kernel;

learning the probabilistic target domain label associated with each target domain feature present in each unlabeled target domain sample, through label propagation over the joint graph G, using the source domain label associated with the source domain feature present in each labeled source domain sample, by minimizing the GTV loss; and

wherein the convergence criterion is when the GTV loss being less than an empirically determined threshold value, to obtain (i) the learnt source projection matrix $P_s$, (ii) the learnt target projection matrix $P_t$, and (iii) the learnt probabilistic target domain label associated with each target domain feature present in each unlabeled target domain sample; and

determining a target domain label associated with each target domain feature present in each unlabeled target domain sample, from the learnt probabilistic target domain label associated with each target domain feature present in each unlabeled target domain sample.

8. The one or more non-transitory machine-readable information storage mediums comprising one or more instructions as claimed in claim 7, wherein (i) the source domain label associated with each source domain feature, and (ii) the target domain label associated with each target domain feature, are part of a plurality of predefined labels.

9. The one or more non-transitory machine-readable information storage mediums comprising one or more instructions as claimed in claim 7, wherein minimizing the GTV loss propagates the source domain labels over the joint graph G to estimate the probabilistic target domain labels associated with the target domain T data.

**Patentansprüche**

1. Prozessorimplementiertes Verfahren (300), das die folgenden Schritte umfasst:

Empfangen, über einen oder mehrere Hardwareprozessoren (104), von Daten $\{X_s, Y_s\}$ einer beschrifteten Quelldomäne S und Daten $\{X_t\}$ einer unbeschrifteten Zieldomäne $T$, wobei die Daten S der beschrifteten Quelldomäne eine Mehrzahl von Proben $\left\{\left(x_{s_1}, y_{s_1}\right), \ldots, \left(x_{s_{n_s}}, y_{s_{n_s}}\right)\right\}$ der beschrifteten Quelldomäne umfassen und jede Probe der beschrifteten Quelldomäne ein Merkmal der Quelldomäne und ein Kennzeichen der Quelldomäne umfasst und die Daten $\{x_{t_1}, \ldots, x_{t_{n_t}}\}$ der unbeschrifteten Zieldomäne $T$ eine oder mehrere Proben der unbeschrifteten Zieldomäne umfassen und jede Probe der unbeschrifteten Zieldomäne ein Merkmal der Zieldomäne (302) umfasst, wobei das Merkmal der Quelldomäne, das in jeder Probe der beschrifteten Quelldomäne vorhanden ist, und das Merkmal der Zieldomäne das in jeder Probe der unbeschrifteten Zieldomäne vorhanden ist, von einem oder mehreren Sensoren erhalten werden, die in einer Maschine vorhanden sind, deren Fehler zu diagnostizieren sind, und wobei die Daten S der beschrifteten Quelldomäne und die Daten $T$ der unbeschrifteten Zieldomäne von Maschinen mit unterschiedlichen Arbeitsbedingungen, unterschiedlichen Abtastfrequenzen und unterschiedlichen Sensorplatzierungen empfangen werden;

wobei die Daten S der beschrifteten Quelldomäne und die Daten T der unbeschrifteten Zieldomäne einem gleichen Merkmalsraum und einem gleichen Kennzeichenraum zugeordnet sind;

Durchführen, über den einen oder die mehreren Hardwareprozessoren (104), einer Optimierung eines Satzes von Parametern, einschließlich (i) einer Quellprojektionsmatrix $P_s$, (ii) einer Zielprojektionsmatrix $P_t$ und (iii) eines Kennzeichens der probabilistischen Zieldomäne, das jedem Merkmal der Zieldomäne zugeordnet ist, das in jeder Probe (304) der unbeschrifteten Zieldomäne vorhanden ist, und wobei die Optimierung Folgendes umfasst:

(a) Initialisieren der Quellprojektionsmatrix $P_s$ und der Zielprojektionsmatrix $P_t$ aus den Daten S der beschrifteten Quelldomäne bzw. den Daten T der unbeschrifteten Zieldomäne unter Verwendung einer Hauptkomponentenanalyse-, PCA-, Technik (304a);

(b) Bestimmen von quellprojizierten Daten $X_{sp}$ und zielprojizierten Daten $X_{tp}$ aus (i) den Daten S der beschrifteten Quelldomäne und der Quellprojektionsmatrix $P_s$ bzw. (ii) den Daten $T$ der unbeschrifteten Zieldomäne und der Zielprojektionsmatrix $P_t$ (304b);

(c) Erweitern der quellprojizierten Daten $X_{sp}$ und der zielprojizierten Daten $X_{tp}$, um einen gemeinsamen Graphen G unter Verwendung eines Gaußschen Kerns (304c) zu konstruieren;

(d) Schätzen des Kennzeichens der probabilistischen Zieldomäne, das jedem Merkmal der Zieldomäne zugeordnet ist, das in jeder Probe der unbeschrifteten Zieldomäne vorhanden ist, durch eine Kennzeichenausbreitung über den gemeinsamen Graphen G unter Verwendung des Kennzeichens der Quelldomäne, das dem Merkmal der Quelldomäne zugeordnet ist, das in jeder Probe der beschrifteten Quelldomäne vorhanden ist, durch Minimieren eines Graphen-Gesamtvariations- (Graph Total Variation), GTV-, Verlusts (304d); und

(e) iteratives Durchführen eines gemeinsamen Lernens unter Verwendung der initialisierten Parameter in Schritt (a) und des Satzes von Parametern von Schritt (b) bis Schritt (d) in einer ersten Iteration und danach gelernter Parameter, bis ein Konvergenzkriterium erfüllt ist (304e), wobei das gemeinsame Lernen Folgendes umfasst:

Lernen jeder der Quellprojektionsmatrix $P_s$ und der Zielprojektionsmatrix $P_t$ unter Verwendung (i) der Daten S der beschrifteten Quelldomäne bzw. der Daten $T$ der unbeschrifteten Zieldomäne und (ii) des Kennzeichens der probabilistischen Zieldomäne, das jedem Merkmal der Zieldomäne zugeordnet ist, das in jeder Probe der unbeschrifteten Zieldomäne vorhanden ist, durch Minimieren eines gewichteten klassenweisen maximalen mittleren Diskrepanz- (Class-Wise Maximum Mean Discrepancy), CMMD-, Verlusts (304e1);

Bestimmen der quellprojizierten Daten $X_{sp}$ und der zielprojizierten Daten $X_{tp}$ aus (i) den Daten S der beschrifteten Quelldomäne und der Quellprojektionsmatrix $P_s$ bzw. (ii) den Daten T der unbeschrifteten Zieldomäne und der Zielprojektionsmatrix $P_t$ (304e2);

Erweitern der quellprojizierten Daten $X_{sp}$ und der zielprojizierten Daten $X_{tp}$, um den gemeinsamen Graphen $G$ unter Verwendung des Gaußschen Kerns (304e3) zu konstruieren;

Lernen des Kennzeichens der probabilistischen Zieldomäne, das jedem Merkmal der Zieldomäne zugeordnet ist, das in jeder Probe der unbeschrifteten Zieldomäne vorhanden ist, durch Kennzeichenausbreitung über den gemeinsamen Graphen G unter Verwendung des Kennzeichens der Quelldomäne, das dem Merkmal der Quelldomäne zugeordnet ist, das in jeder Probe der beschrifteten Quelldomäne vorhanden ist, durch Minimieren des GTV-Verlusts (304e4); und

wobei das Konvergenzkriterium ist, wenn der GTV-Verlust kleiner als ein empirisch bestimmter Schwellenwert ist, um (i) die gelernte Quellprojektionsmatrix $P_s$, (ii) die gelernte Zielprojektionsmatrix $P_t$ und (iii) das Kennzeichen der gelernten probabilistischen Zieldomäne zu erhalten, das jedem Merkmal der Zieldomäne zugeordnet ist, das in jeder Probe der unbeschrifteten Zieldomäne vorhanden ist; und

Bestimmen, über den einen oder die mehreren Hardwareprozessoren (104), eines Kennzeichens der Zieldomäne, das jedem Merkmal der Zieldomäne zugeordnet ist, das in jeder Probe der unbeschrifteten Zieldomäne vorhanden ist, aus dem Kennzeichen der gelernten probabilistischen Zieldomäne, das jedem Merkmal der Zieldomäne zugeordnet ist, das in jeder Probe der unbeschrifteten Zieldomäne vorhanden ist (306).

2. Prozessorimplementiertes Verfahren nach Anspruch 1, wobei (i) das Kennzeichen der Quelldomäne, das jedem Merkmal der Quelldomäne zugeordnet ist, und (ii) das Kennzeichen der Zieldomäne, das jedem Merkmal der Zieldomäne zugeordnet ist, Teil einer Mehrzahl von vordefinierten Kennzeichen sind.

3. Prozessorimplementiertes Verfahren nach Anspruch 1, wobei das Minimieren des GTV-Verlusts die Kennzeichen der Quelldomäne über den gemeinsamen Graphen G ausbreitet, um die Kennzeichen der probabilistischen Zieldomäne zu schätzen, die den Daten der Zieldomäne T zugeordnet sind.

4. System (100), umfassend:

einen Speicher (102), der Anweisungen speichert;

eine oder mehrere Eingabe/Ausgabe(E/A)-Schnittstellen (106); und

einen oder mehrere Hardware-Prozessoren (104), die über die eine oder die mehreren E/A-Schnittstellen (106) mit dem Speicher (102) gekoppelt sind, wobei der eine oder die mehreren Hardware-Prozessoren (104) durch die Anweisungen konfiguriert sind zum:

Empfangen von Daten $\{X_s, Y_s\}$ einer beschrifteten Quelldomäne S und Daten $\{X_t\}$ einer unbeschrifteten Zieldomäne $T$, wobei die Daten S der beschrifteten Quelldomäne eine Mehrzahl von Proben $\left\{\left(x_{s_1}, y_{s_1}\right), \ldots, \left(x_{s_{n_s}}, y_{s_{n_s}}\right)\right\}$ der beschrifteten Quelldomäne umfassen und jede Probe der beschrifteten Quelldomäne ein Merkmal der Quelldomäne und ein Kennzeichen der Quelldomäne umfasst und die Daten T der unbeschrifteten Zieldomäne eine oder mehrere Proben der unbeschrifteten Zieldomäne $\{x_{t_1}, \ldots, x_{t_{n_t}}\}$ umfassen und jede Probe der unbeschrifteten Zieldomäne ein Merkmal der Zieldomäne umfasst, wobei das Merkmal der Quelldomäne, das in jeder Probe der beschrifteten Quelldomäne vorhanden ist, und das Merkmal der Zieldomäne das in jeder Probe der unbeschrifteten Zieldomäne vorhanden ist, von einem oder mehreren Sensoren erhalten werden, die in einer Maschine vorhanden sind, deren Fehler zu diagnostizieren sind, und wobei die Daten S der beschrifteten Quelldomäne und die Daten $T$ der unbeschrifteten Zieldomäne von Maschinen mit unterschiedlichen Arbeitsbedingungen, unterschiedlichen Abtastfrequenzen und unterschiedlichen Sensorplatzierungen empfangen werden;

wobei die Daten S der beschrifteten Quelldomäne und die Daten T der unbeschrifteten Zieldomäne einem gleichen Merkmalsraum und einem gleichen Kennzeichenraum zugeordnet sind;

Durchführen einer Optimierung eines Satzes von Parametern, einschließlich (i) einer Quellprojektionsmatrix $P_s$, (ii) einer Zielprojektionsmatrix $P_t$ und (iii) eines Kennzeichens der probabilistischen Zieldomäne, das jedem Merkmal der Zieldomäne zugeordnet ist, das in jeder Probe der unbeschrifteten Zieldomäne vorhanden ist, und wobei die Optimierung Folgendes umfasst:

(a) Initialisieren der Quellprojektionsmatrix $P_s$ und der Zielprojektionsmatrix $P_t$ aus den Daten S der beschrifteten Quelldomäne bzw. den Daten T der unbeschrifteten Zieldomäne unter Verwendung einer Hauptkomponentenanalyse- (Principal Component Analysis), PCA-, Technik;

(b) Bestimmen von quellprojizierten Daten $X_{sp}$ und zielprojizierten Daten $X_{tp}$ aus (i) den Daten S der beschrifteten Quelldomäne und der Quellprojektionsmatrix $P_s$ bzw. (ii) den Daten $T$ der unbeschrifteten Zieldomäne und der Zielprojektionsmatrix $P_t$;

(c) Erweitern der quellprojizierten Daten $X_{sp}$ und der zielprojizierten Daten $X_{tp}$, um einen gemeinsamen Graphen G unter Verwendung eines Gaußschen Kerns zu konstruieren;

(d) Schätzen des Kennzeichens der probabilistischen Zieldomäne, das jedem Merkmal der Zieldomäne zugeordnet ist, das in jeder Probe der unbeschrifteten Zieldomäne vorhanden ist, durch Kennzeichenausbreitung über den gemeinsamen Graphen G unter Verwendung des Kennzeichens der Quelldomäne, das dem Merkmal der Quelldomäne in jeder Probe der beschrifteten Quelldomäne zugeordnet ist, durch Minimieren eines Graphen-Gesamtvariations- (Graph Total Varation), GTV-, Verlusts; und

(e) iteratives Durchführen eines gemeinsamen Lernens unter Verwendung der initialisierten Parameter in Schritt (a) und des Satzes von Parametern von Schritt (b) bis Schritt (d) in einer ersten Iteration und danach gelernter Parameter, bis ein Konvergenzkriterium erfüllt ist, wobei das gemeinsame Lernen Folgendes umfasst:

Lernen jeder der Quellprojektionsmatrix $P_s$ und der Zielprojektionsmatrix $P_t$ unter Verwendung (i) der Daten S der beschrifteten Quelldomäne bzw. der Daten $T$ der unbeschrifteten Zieldomäne und (ii) des Kennzeichens der probabilistischen Zieldomäne, das jedem Merkmal der Zieldomäne zugeordnet ist, das in jeder Probe der unbeschrifteten Zieldomäne vorhanden ist, durch Minimieren eines gewichteten klassenweisen maximalen mittleren Diskrepanz- (Class-Wise Maximum Mean Discrepancy), CMMD-, Verlusts;

Bestimmen der quellprojizierten Daten $X_{sp}$ und der zielprojizierten Daten $X_{tp}$ aus (i) den Daten S der beschrifteten Quelldomäne und der Quellprojektionsmatrix $P_s$ bzw. (ii) den Daten T der unbeschrifteten Zieldomäne und der Zielprojektionsmatrix $P_t$;

Erweitern der quellprojizierten Daten $X_{sp}$ und der zielprojizierten Daten $X_{tp}$, um den gemeinsamen Graphen G unter Verwendung des Gaußschen Kerns zu konstruieren;

Lernen des Kennzeichens der probabilistischen Zieldomäne, das jedem Merkmal der Zieldomäne zugeordnet ist, das in jeder Probe der unbeschrifteten Zieldomäne vorhanden ist, durch Kennzeichenausbreitung über den gemeinsamen Graphen G unter Verwendung des Kennzeichens der Quelldomäne, das dem Merkmal der Quelldomäne zugeordnet ist, das in jeder Probe der beschrifteten Quelldomäne vorhanden ist, durch Minimieren des GTV-Verlusts; und

wobei das Konvergenzkriterium ist, wenn der GTV-Verlust kleiner als ein empirisch bestimmter Schwellenwert ist, um (i) die gelernte Quellprojektionsmatrix $P_s$, (ii) die gelernte Zielprojektionsmatrix $P_t$ und (iii) das Kennzeichen der gelernten probabilistischen Zieldomäne zu erhalten, das jedem Merkmal der Zieldomäne zugeordnet ist, das in jeder Probe der unbeschrifteten Zieldomäne vorhanden ist; und

Bestimmen eines Kennzeichens der Zieldomäne, das jedem Merkmal der Zieldomäne zugeordnet ist, das in jeder Probe der unbeschrifteten Zieldomäne vorhanden ist, aus dem Kennzeichen der gelernten probabilistischen Zieldomäne, das jedem Merkmal der Zieldomäne zugeordnet ist, das in jeder Probe der unbeschrifteten Zieldomäne vorhanden ist.

5. System nach Anspruch 4, wobei (i) das Kennzeichen der Quelldomäne, das jedem Merkmal der Quelldomäne zugeordnet ist, und (ii) das Kennzeichen der Zieldomäne, das jedem Merkmal der Zieldomäne zugeordnet ist, Teil einer Mehrzahl von vordefinierten Kennzeichen sind.

6. System nach Anspruch 4, wobei das Minimieren des GTV-Verlusts die Kennzeichen der Quelldomäne über den gemeinsamen Graphen G ausbreitet, um die Kennzeichen der probabilistischen Zieldomäne zu schätzen, die den Daten der Zieldomäne T zugeordnet sind.

7. Ein oder mehrere nichtflüchtige maschinenlesbare Informationsspeichermedien, die eine oder mehrere Anweisungen umfassen, die, wenn sie von einem oder mehreren Hardware-Prozessoren ausgeführt werden, den einen oder die mehreren Hardware-Prozessoren veranlassen, die folgenden Schritte durchzuführen:

Empfangen von Daten der beschrifteten Quelldomäne $S\ \{X_s,\ Y_s\}$ und Daten der unbeschrifteten Zieldomäne $T$ $\{X_t\}$

, wobei die Daten der beschrifteten Quelldomäne S eine Mehrzahl von Kennzeichen der beschrifteten Quelldomäne

$$\left\{\left(x_{s_1}, y_{s_1}\right), \ldots, \left(x_{s_{n_S}}, y_{s_{n_S}}\right)\right\}$$ umfassen und jedes Kennzeichen der beschrifteten Quelldomäne ein Merkmal der Quelldomäne und ein Kennzeichen der Quelldomäne umfasst und die Daten der unbeschrifteten Zieldomäne $T$ ein oder mehrere Kennzeichen der unbeschrifteten Zieldomäne $$\left\{x_{t_1}, \ldots, x_{t_{n_t}}\right\}$$ umfassen und jedes Kennzeichen der unbeschrifteten Zieldomäne ein Merkmal der Zieldomäne umfasst, wobei das Merkmal der Quelldomäne, das in jedem Kennzeichen der beschrifteten Quelldomäne vorhanden ist, und das Merkmal der Zieldomäne, das in jedem Kennzeichen der unbeschrifteten Zieldomäne vorhanden ist, von einem oder mehreren Sensoren erhalten werden, die in einer Maschine vorhanden sind, deren Fehler zu diagnostizieren sind, und wobei die Daten der beschrifteten Quelldomäne S und die Daten der unbeschrifteten Zieldomäne T von Maschinen mit unterschiedlichen Arbeitsbedingungen, unterschiedlichen Abtastfrequenzen und unterschiedlichen Sensorplatzierungen empfangen werden;

wobei die Daten S der beschrifteten Quelldomäne und die Daten T der unbeschrifteten Zieldomäne einem gleichen Merkmalsraum und einem gleichen Kennzeichenraum zugeordnet sind;

Durchführen einer Optimierung eines Satzes von Parametern, einschließlich (i) einer Quellprojektionsmatrix $P_s$, (ii) einer Zielprojektionsmatrix $P_t$ und (iii) eines Kennzeichens der probabilistischen Zieldomäne, das jedem Merkmal der Zieldomäne zugeordnet ist, das in jeder Probe der unbeschrifteten Zieldomäne vorhanden ist, und wobei die Optimierung Folgendes umfasst:

(a) Initialisieren der Quellprojektionsmatrix $P_s$ und der Zielprojektionsmatrix $P_t$ aus den Daten $S$ der beschrifteten Quelldomäne bzw. den Daten T der unbeschrifteten Zieldomäne unter Verwendung einer Hauptkomponentenanalyse-, PCA-, Technik;

(b) Bestimmen von quellprojizierten Daten $X_{sp}$ und zielprojizierten Daten $X_{tp}$ aus (i) den Daten S der beschrifteten Quelldomäne und der Quellprojektionsmatrix $P_s$ bzw. (ii) den Daten $T$ der unbeschrifteten Zieldomäne und der Zielprojektionsmatrix $P_t$;

(c) Erweitern der quellprojizierten Daten $X_{sp}$ und der zielprojizierten Daten $X_{tp}$, um einen gemeinsamen Graphen G unter Verwendung eines Gaußschen Kerns zu konstruieren;

(d) Schätzen des Kennzeichens der probabilistischen Zieldomäne, das jedem Merkmal der Zieldomäne zugeordnet ist, das in jeder Probe der unbeschrifteten Zieldomäne vorhanden ist, durch eine Kennzeichenausbreitung über den gemeinsamen Graphen G unter Verwendung des Kennzeichens der Quelldomäne, das dem Merkmal der Quelldomäne zugeordnet ist, das in jeder Probe der beschrifteten Quelldomäne vorhanden ist, durch Minimieren eines Graphen-Gesamtvariations- (Graph Total Variation), GTV-, Verlusts; und

(e) iteratives Durchführen eines gemeinsamen Lernens unter Verwendung der initialisierten Parameter in Schritt (a) und des Satzes von Parametern von Schritt (b) bis Schritt (d) in einer ersten Iteration und danach gelernter Parameter, bis ein Konvergenzkriterium erfüllt ist, wobei das gemeinsame Lernen Folgendes umfasst:

Lernen jeder der Quellprojektionsmatrix $P_s$ und der Zielprojektionsmatrix $P_t$ unter Verwendung (i) der Daten S der beschrifteten Quelldomäne bzw. der Daten $T$ der unbeschrifteten Zieldomäne und (ii) des Kennzeichens der probabilistischen Zieldomäne, das jedem Merkmal der Zieldomäne zugeordnet ist, das in jeder Probe der unbeschrifteten Zieldomäne vorhanden ist, durch Minimieren eines gewichteten klassenweisen maximalen mittleren Diskrepanz- (Class-Wise Maximum Mean Discrepancy), CMMD-, Verlusts;

Bestimmen der quellprojizierten Daten $X_{sp}$ und der zielprojizierten Daten $X_{tp}$ aus (i) den Daten S der beschrifteten Quelldomäne und der Quellprojektionsmatrix $P_s$ bzw. (ii) den Daten T der unbeschrifteten Zieldomäne und der Zielprojektionsmatrix $P_t$;

Erweitern der quellprojizierten Daten $X_{sp}$ und der zielprojizierten Daten $X_{tp}$, um den gemeinsamen Graphen G unter Verwendung des Gaußschen Kerns zu konstruieren;

Lernen des Kennzeichens der probabilistischen Zieldomäne, das jedem Merkmal der Zieldomäne zugeordnet ist, das in jeder Probe der unbeschrifteten Zieldomäne vorhanden ist, durch Kennzeichenausbreitung über den gemeinsamen Graphen G unter Verwendung des Kennzeichens der Quelldomäne, das dem Merkmal der Quelldomäne zugeordnet ist, das in jeder Probe der beschrifteten Quelldomäne vorhanden ist, durch Minimieren des GTV-Verlusts; und

wobei das Konvergenzkriterium ist, wenn der GTV-Verlust kleiner als ein empirisch bestimmter Schwellenwert ist, um (i) die gelernte Quellprojektionsmatrix $P_s$, (ii) die gelernte Zielprojektionsmatrix $P_t$ und (iii) das Kennzeichen der gelernten probabilistischen Zieldomäne zu erhalten, das jedem Merkmal der Zieldomäne zugeordnet ist, das in jeder Probe der unbeschrifteten Zieldomäne vorhanden ist; und

Bestimmen eines Kennzeichens der Zieldomäne, das jedem Merkmal der Zieldomäne zugeordnet ist, das in jeder Probe der unbeschrifteten Zieldomäne vorhanden ist, aus dem Kennzeichen der gelernten probabilistischen Zieldomäne, das jedem Merkmal der Zieldomäne zugeordnet ist, das in jeder Probe der unbeschrifteten Zieldomäne vorhanden ist.

8. Ein oder mehrere nichtflüchtige maschinenlesbare Informationsspeichermedien, die eine oder mehrere Anweisungen nach Anspruch 7 umfassen, wobei (i) das Kennzeichen der Quelldomäne, das jedem Merkmal der Quelldomäne zugeordnet ist, und (ii) das Kennzeichen der Zieldomäne, das jedem Merkmal der Zieldomäne zugeordnet ist, Teil einer Mehrzahl von vordefinierten Kennzeichen sind.

**9.** Ein oder mehrere nichtflüchtige maschinenlesbare Informationsspeichermedien, die eine oder mehrere Anweisungen nach Anspruch 7 umfassen, wobei das Minimieren des GTV-Verlusts die Kennzeichen der Quelldomäne über den gemeinsamen Graphen G ausbreitet, um die Kennzeichen der probabilistischen Zieldomäne zu schätzen, die den Daten der Zieldomäne T zugeordnet sind.

**Revendications**

**1.** Procédé mis en oeuvre par processeur (300), comprenant les étapes consistant à :

recevoir, par l'intermédiaire d'un ou plusieurs processeurs matériels (104), des données de domaine source étiqueté S $\{X_s, Y_s\}$, et des données de domaine cible non étiqueté T $\{Xt\}$, dans lequel les données de domaine source étiqueté S comprennent une pluralité d'échantillons de domaine source étiqueté $\left\{\left(x_{s_1}, y_{s_1}\right), ..., \left(x_{s_{n_s}}, y_{s_{n_s}}\right)\right\}$ et chaque échantillon de domaine source étiqueté comprend une caractéristique de domaine source et une étiquette de domaine source, et les données de domaine cible non étiqueté T comprennent un ou plusieurs échantillons de domaine cible non étiqueté $\left\{x_{t_1}, ..., x_{t_{n_t}}\right\}$ et chaque échantillon de domaine cible non étiqueté comprend une caractéristique de domaine cible (302), dans lequel la caractéristique de domaine source présente dans chaque échantillon de domaine source étiqueté et la caractéristique de domaine cible présente dans chaque échantillon de domaine cible non étiqueté sont obtenues à partir d'un ou plusieurs capteurs présents dans une machine dont les défauts doivent être diagnostiqués, et dans lequel les données de domaine source étiqueté S et les données de domaine cible non étiqueté T sont reçues à partir de machines ayant des conditions de fonctionnement différentes, des fréquences d'échantillonnage différentes et des placements de capteurs différents ;
dans lequel les données de domaine source étiqueté S et les données de domaine cible non étiqueté T sont associées à un même espace de caractéristiques et un même espace d'étiquettes ;
effectuer, par l'intermédiaire des un ou plusieurs processeurs matériels (104), une optimisation d'un ensemble de paramètres comprenant (i) une matrice de projection source $P_s$, (ii) une matrice de projection cible $P_t$, et (iii) une étiquette de domaine cible probabiliste associée à chaque caractéristique de domaine cible présente dans chaque échantillon de domaine cible non étiqueté (304), et dans lequel l'optimisation comprend les étapes consistant à :

(a) initialiser la matrice de projection source $P_s$ et la matrice de projection cible $P_t$, à partir des données de domaine source étiqueté S et des données de domaine cible non étiqueté T, respectivement, en utilisant une technique d'analyse en composantes principales, PCA, (304a) ;
(b) déterminer des données projetées source $X_{sp}$ et des données projetées cible $X_{tp}$, à partir (i) des données de domaine source étiqueté S et de la matrice de projection source $P_s$, et (ii) des données de domaine cible non étiqueté T et de la matrice de projection cible $P_t$, respectivement (304b) ;
(c) augmenter les données projetées source $X_{sp}$ et les données projetées cible $X_{tp}$, pour construire un graphique conjoint G, en utilisant un noyau gaussien (304c) ;
(d) estimer l'étiquette de domaine cible probabiliste associée à chaque caractéristique de domaine cible présente dans chaque échantillon de domaine cible non étiqueté, par l'intermédiaire d'une propagation d'étiquettes sur le graphique conjoint G, en utilisant l'étiquette de domaine source associée à la caractéristique de domaine source présente dans chaque échantillon de domaine source étiqueté, en minimisant une perte de variation totale de graphique, GTV, (304d) ; et
(e) effectuer de manière itérative un apprentissage conjoint en utilisant les paramètres initialisés à l'étape (a) et l'ensemble de paramètres de l'étape (b) à l'étape (d) dans une première itération et des paramètres appris par la suite jusqu'à ce qu'un critère de convergence soit satisfait (304e), dans lequel l'apprentissage conjoint comprend les étapes consistant à :

apprendre chacune de la matrice de projection source $P_s$ et de la matrice de projection cible $P_t$, en utilisant (i) les données de domaine source étiqueté S et les données de domaine cible non étiqueté T, respectivement, et (ii) l'étiquette de domaine cible probabiliste associée à chaque caractéristique de domaine cible présente dans chaque échantillon de domaine cible non étiqueté, en minimisant une perte de divergence moyenne maximale pondérée par classe, CMMD, (304e1) ;

déterminer les données projetées source $X_{sp}$ et les données projetées cible $X_{tp}$, à partir (i) des données de domaine source étiqueté S et de la matrice de projection source $P_s$, et (ii) des données de domaine cible non étiqueté T et de la matrice de projection cible $P_t$, respectivement (304e2) ;

augmenter les données projetées source $X_{sp}$ et les données projetées cible $X_{tp}$, pour construire le graphique conjoint G, en utilisant le noyau gaussien (304e3) ;

apprendre l'étiquette de domaine cible probabiliste associée à chaque caractéristique de domaine cible présente dans chaque échantillon de domaine cible non étiqueté, par l'intermédiaire d'une propagation d'étiquettes sur le graphique conjoint G, en utilisant l'étiquette de domaine source associée à la caractéristique de domaine source présente dans chaque échantillon de domaine source étiqueté, en minimisant la perte de variation totale de graphique, GTV, (304e4) ; et

dans lequel le critère de convergence est lorsque la perte GTV est inférieure à une valeur de seuil déterminée empiriquement, obtenir (i) la matrice de projection source apprise $P_s$, (ii) la matrice de projection cible apprise $P_t$, et (iii) l'étiquette de domaine cible probabiliste apprise associée à chaque caractéristique de domaine cible présente dans chaque échantillon de domaine cible non étiqueté ; et

déterminer, par l'intermédiaire des un ou plusieurs processeurs matériels (104), une étiquette de domaine cible associée à chaque caractéristique de domaine cible présente dans chaque échantillon de domaine cible non étiqueté, à partir de l'étiquette de domaine cible probabiliste apprise associée à chaque caractéristique de domaine cible présente dans chaque échantillon de domaine cible non étiqueté (306).

2. Procédé mis en oeuvre par processeur selon la revendication 1, dans lequel (i) l'étiquette de domaine source associée à chaque caractéristique de domaine source, et (ii) l'étiquette de domaine cible associée à chaque caractéristique de domaine cible, font partie d'une pluralité d'étiquettes prédéfinies.

3. Procédé mis en oeuvre par processeur selon la revendication 1, dans lequel la minimisation de la perte GTV propage les étiquettes de domaine source sur le graphique conjoint G pour estimer les étiquettes de domaine cible probabilistes associées aux données de domaine cible.

4. Système (100) comprenant :

une mémoire (102) stockant des instructions ;
une ou plusieurs interfaces d'entrée/sortie (E/S) (106) ; et
un ou plusieurs processeurs matériels (104) couplés à la mémoire (102) par l'intermédiaire des une ou plusieurs interfaces E/S (106), dans lequel les un ou plusieurs processeurs matériels (104) sont configurés par les instructions pour :

recevoir des données de domaine source étiqueté $S\{X_s, Y_s\}$, et des données de domaine cible non étiqueté T $\{X_t\}$, dans lequel les données de domaine source étiqueté S comprennent une pluralité d'échantillons de domaine source étiqueté $\left\{\left(x_{s_1}, y_{s_1}\right), \ldots, \left(x_{s_{n_s}}, y_{s_{n_s}}\right)\right\}$ et chaque échantillon de domaine source étiqueté comprend une caractéristique de domaine source et une étiquette de domaine source, et les données de domaine cible non étiqueté T comprennent un ou plusieurs échantillons de domaine cible non étiqueté $\left\{x_{t_1}, \ldots, x_{t_{n_t}}\right\}$ et chaque échantillon de domaine cible non étiqueté comprend une caractéristique de domaine cible, dans lequel la caractéristique de domaine source présente dans chaque échantillon de domaine source étiqueté et la caractéristique de domaine cible présente dans chaque échantillon de domaine cible non étiqueté sont obtenues à partir d'un ou plusieurs capteurs présents dans une machine dont les défauts doivent être diagnostiqués, et dans lequel les données de domaine source étiqueté S et les données de domaine cible non étiqueté T sont reçues à partir de machines ayant des conditions de fonctionnement différentes, des fréquences d'échantillonnage différentes et des placements de capteurs différents ;

dans lequel les données de domaine source étiqueté S et les données de domaine cible non étiqueté T sont associées à un même espace de caractéristiques et un même espace d'étiquettes ;

effectuer une optimisation d'un ensemble de paramètres comprenant (i) une matrice de projection source $P_s$, (ii) une matrice de projection cible $P_t$, et (iii) une étiquette de domaine cible probabiliste associée à chaque caractéristique de domaine cible présente dans chaque échantillon de domaine cible non étiqueté, et dans lequel l'optimisation comprend les étapes consistant à :

(a) initialiser la matrice de projection source $P_s$ et la matrice de projection cible $P_t$, à partir des données de domaine source étiqueté S et des données de domaine cible non étiqueté T, respectivement, en utilisant une technique d'analyse en composantes principales, PCA ;

(b) déterminer des données projetées source $X_{sp}$ et des données projetées cible $X_{tp}$, à partir (i) des données de domaine source étiqueté S et de la matrice de projection source $P_s$, et (ii) des données de domaine cible non étiqueté T et de la matrice de projection cible $P_t$, respectivement ;

(c) augmenter les données projetées source $X_{sp}$ et les données projetées cible $X_{tp}$, pour construire un graphique conjoint G, en utilisant un noyau gaussien ;

(d) estimer l'étiquette de domaine cible probabiliste associée à chaque caractéristique de domaine cible présente dans chaque échantillon de domaine cible non étiqueté, par l'intermédiaire d'une propagation d'étiquettes sur le graphique conjoint G, en utilisant l'étiquette de domaine source associée à la caractéristique de domaine source dans chaque échantillon de domaine source étiqueté, en minimisant une perte de variation totale de graphique, GTV ; et

(e) effectuer de manière itérative un apprentissage conjoint en utilisant les paramètres initialisés à l'étape (a) et l'ensemble de paramètres de l'étape (b) à l'étape (d) dans une première itération et des paramètres appris par la suite jusqu'à ce qu'un critère de convergence soit satisfait, dans lequel l'apprentissage conjoint comprend les étapes consistant à :

apprendre chacune de la matrice de projection source $P_s$ et de la matrice de projection cible $P_t$, en utilisant (i) les données de domaine source étiqueté S et les données de domaine cible non étiqueté T, respectivement, et (ii) l'étiquette de domaine cible probabiliste associée à chaque caractéristique de domaine cible présente dans chaque échantillon de domaine cible non étiqueté, en minimisant une perte de divergence moyenne maximale pondérée par classe, CMMD ;

déterminer les données projetées source $X_{sp}$ et les données projetées cible $X_{tp}$, à partir (i) des données de domaine source étiqueté S et de la matrice de projection source $P_s$, et (ii) des données de domaine cible non étiqueté T et de la matrice de projection cible $P_t$, respectivement ;

augmenter les données projetées source $X_{sp}$ et les données projetées cible $X_{tp}$, pour construire le graphique conjoint G, en utilisant le noyau gaussien ;

apprendre l'étiquette de domaine cible probabiliste associée à chaque caractéristique de domaine cible présente dans chaque échantillon de domaine cible non étiqueté, par l'intermédiaire d'une propagation d'étiquettes sur le graphique conjoint G, en utilisant l'étiquette de domaine source associée à la caractéristique de domaine source présente dans chaque échantillon de domaine source étiqueté, en minimisant la perte de variation totale de graphique, GTV ; et

dans lequel le critère de convergence est lorsque la perte GTV est inférieure à une valeur de seuil déterminée empiriquement, obtenir (i) la matrice de projection source apprise $P_s$, (ii) la matrice de projection cible apprise $P_t$, et (iii) l'étiquette de domaine cible probabiliste apprise associée à chaque caractéristique de domaine cible présente dans chaque échantillon de domaine cible non étiqueté ; et

déterminer une étiquette de domaine cible associée à chaque caractéristique de domaine cible présente dans chaque échantillon de domaine cible non étiqueté, à partir de l'étiquette de domaine cible probabiliste apprise associée à chaque caractéristique de domaine cible présente dans chaque échantillon de domaine cible non étiqueté.

**5.** Système selon la revendication 4, dans lequel (i) l'étiquette de domaine source associée à chaque caractéristique de domaine source, et (ii) l'étiquette de domaine cible associée à chaque caractéristique de domaine cible, font partie d'une pluralité d'étiquettes prédéfinies.

**6.** Système selon la revendication 4, dans lequel la minimisation de la perte de variation totale de graphique, GTV, propage les étiquettes de domaine source sur le graphique conjoint G pour estimer les étiquettes de domaine cible probabilistes associées aux données de domaine cible.

**7.** Un ou plusieurs supports de stockage d'informations lisibles par machine non transitoires comprenant une ou plusieurs instructions qui, lorsqu'elles sont exécutées par un ou plusieurs processeurs matériels, amènent les un ou plusieurs processeurs matériels à effectuer les étapes consistant à :

recevoir des données de domaine source étiqueté $S\{X_s, Y_s\}$, et des données de domaine cible non étiqueté $\{X_t\}$, dans lequel les données de domaine source étiqueté S comprennent une pluralité d'échantillons de domaine source étiqueté $\left\{ \left( x_{s_1}, y_{s_1} \right), \dots, \left( x_{s_{n_s}}, y_{s_{n_s}} \right) \right\}$ et chaque échantillon de domaine source étiqueté comprend une caractéristique de domaine source et une étiquette de domaine source, et les données de domaine cible non étiqueté T comprennent un ou plusieurs échantillons de domaine cible non étiqueté $\{ x_{t_1}, \dots, x_{t_{n_t}} \}$ et chaque échantillon de domaine cible non étiqueté comprend une caractéristique de domaine cible, dans lequel la caractéristique de domaine source présente dans chaque échantillon de domaine source étiqueté et la caractéristique de domaine cible présente dans chaque échantillon de domaine cible non étiqueté sont obtenues à partir d'un ou plusieurs capteurs présents dans une machine dont les défauts doivent être diagnostiqués, et dans lequel les données de domaine source étiqueté S et les données de domaine cible non étiqueté T sont reçues à partir de machines avec différentes conditions de fonctionnement, différentes fréquences d'échantillonnage, et différents placements de capteur ;

dans lequel les données de domaine source étiqueté S et les données de domaine cible non étiqueté T sont associées à un même espace de caractéristiques et un même espace d'étiquettes ;

effectuer une optimisation d'un ensemble de paramètres comprenant (i) une matrice de projection source $P_s$, (ii) une matrice de projection cible $P_t$, et (iii) une étiquette de domaine cible probabiliste associée à chaque caractéristique de domaine cible présente dans chaque échantillon de domaine cible non étiqueté, et dans lequel l'optimisation comprend les étapes consistant à :

(a) initialiser la matrice de projection source $P_s$ et la matrice de projection cible $P_t$, à partir des données de domaine source étiqueté S et des données de domaine cible non étiqueté T, respectivement, en utilisant une technique d'analyse en composantes principales, PCA ;

(b) déterminer des données projetées source $X_{sp}$ et des données projetées cible $X_{tp}$, à partir (i) des données de domaine source étiqueté $S$ et de la matrice de projection source $P_s$, et (ii) des données de domaine cible non étiqueté T et de la matrice de projection cible $P_t$, respectivement ;

(c) augmenter les données projetées source $X_{sp}$ et les données projetées cible $X_{tp}$, pour construire un graphique conjoint G, en utilisant un noyau gaussien ;

(d) estimer l'étiquette de domaine cible probabiliste associée à chaque caractéristique de domaine cible présente dans chaque échantillon de domaine cible non étiqueté, par l'intermédiaire d'une propagation d'étiquettes sur le graphique conjoint G, en utilisant l'étiquette de domaine source associée à la caractéristique de domaine source présente dans chaque échantillon de domaine source étiqueté, en minimisant une perte de variation totale de graphique, GTV ; et

(e) effectuer de manière itérative un apprentissage conjoint en utilisant les paramètres initialisés à l'étape (a) et l'ensemble de paramètres de l'étape (b) à l'étape (d) dans une première itération et des paramètres appris par la suite jusqu'à ce qu'un critère de convergence soit satisfait, dans lequel l'apprentissage conjoint comprend les étapes consistant à :

apprendre chacune de la matrice de projection source $P_s$ et de la matrice de projection cible $P_t$, en utilisant (i) les données de domaine source étiqueté S et les données de domaine cible non étiqueté T, respectivement, et (ii) l'étiquette de domaine cible probabiliste associée à chaque caractéristique de domaine cible présente dans chaque échantillon de domaine cible non étiqueté, en minimisant une perte de divergence moyenne maximale pondérée par classe, CMMD ;

déterminer les données projetées source $X_{sp}$ et les données projetées cible $X_{tp}$, à partir (i) des données de domaine source étiqueté S et de la matrice de projection source $P_s$, et (ii) des données de domaine cible non étiqueté T et de la matrice de projection cible $P_t$, respectivement ;

augmenter les données projetées source $X_{sp}$ et les données projetées cible $X_{tp}$, pour construire le graphique conjoint G, en utilisant le noyau gaussien ;

apprendre l'étiquette de domaine cible probabiliste associée à chaque caractéristique de domaine cible présente dans chaque échantillon de domaine cible non étiqueté, par l'intermédiaire d'une propagation d'étiquettes sur le graphique conjoint G, en utilisant l'étiquette de domaine source associée à la caractéristique de domaine source présente dans chaque échantillon de domaine source étiqueté, en minimisant la perte de variation totale de graphique, GTV ; et

dans lequel le critère de convergence est lorsque la perte GTV est inférieure à une valeur de seuil déterminée empiriquement, obtenir (i) la matrice de projection source apprise $P_s$, (ii) la matrice de projection cible apprise $P_t$, et (iii) l'étiquette de domaine cible probabiliste apprise associée à chaque caractéristique de domaine cible présente dans chaque échantillon de domaine cible non étiqueté ; et

déterminer une étiquette de domaine cible associée à chaque caractéristique de domaine cible présente dans chaque échantillon de domaine cible non étiqueté, à partir de l'étiquette de domaine cible probabiliste apprise associée à chaque caractéristique de domaine cible présente dans chaque échantillon de domaine cible non étiqueté.

8. Un ou plusieurs supports de stockage d'informations lisibles par machine non transitoires comprenant une ou plusieurs instructions selon la revendication 7, dans lequel (i) l'étiquette de domaine source associée à chaque caractéristique de domaine source, et (ii) l'étiquette de domaine cible associée à chaque caractéristique de domaine cible, font partie d'une pluralité d'étiquettes prédéfinies.

9. Un ou plusieurs supports de stockage d'informations lisibles par machine non transitoires comprenant une ou plusieurs instructions selon la revendication 7, dans lequel la minimisation de la perte de variation totale de graphique, GTV, propage les étiquettes de domaine source sur le graphique conjoint G pour estimer les étiquettes de domaine cible probabilistes associées aux données de domaine cible.

System **100**

**108**

Memory **102**

Modules **102a**

Repository **102b**

I/O interface(s) **106**

Hardware processor(s) **104**

FIG. 1

Source
data $X_s$

Source
Projection
matrix $P_s$

$X_{sp} = P_s^T X_s$

Target data
$X_t$

Target
Projection
matrix $P_t$

$X_{tp} = P_t^T X_t$

Joint
Graph $G$

Label
Propagation

$Y = [Y_s; \overline{Y_t}]$

$Y_s$

FIG. 2

300

Receive a labeled source domain data, and an unlabeled target domain data, wherein the labeled source domain data comprises a plurality of labeled source domain samples, and each labeled source domain sample comprises a source domain feature and a source domain label, and the unlabeled target domain data comprises one or more unlabeled target domain samples, and each unlabeled target domain sample comprises a target domain feature **302**

Perform an optimization of a set of parameters including (i) a source projection matrix, (ii) a target projection matrix, and (iii) a probabilistic target domain label corresponding to each target domain feature present in each unlabeled target domain sample (**304**), and wherein the optimization comprising:

Initializing the source projection matrix and the target projection matrix, from the labeled source domain data and the unlabeled target domain data respectively, using a principal component analysis (PCA) technique **304a**

Determining a source projected data and a target projected data, from (i) the labeled source domain data and the source projection matrix, and (ii) the unlabeled target domain data and the target projection matrix, respectively **304b**

Augmenting the source projected data and the target projected data, to construct a joint graph, using a Gaussian kernel **304c**

Estimating the probabilistic target domain label corresponding to each target domain feature present in each unlabeled target domain sample, through label propagation over the joint graph, using the source domain label corresponding to the source domain feature present in each labeled source domain sample, by minimizing a graph total variation (GTV) loss **304d**

A

FIG. 3A

A

Iteratively performing a joint learning using the initialized parameters at step (**304a**) and the set of parameters from step (**304b**) through step (**304d**) in a first iteration and learnt parameters thereafter until a convergence criterion is met (**304e**), wherein the joint learning comprising:

Learning each of the source projection matrix and the target projection matrix, using (i) the labeled source domain data and the unlabeled target domain data respectively, and (ii) the probabilistic target domain label corresponding to each target domain feature present in each unlabeled target domain sample, by minimizing a weighted class-wise maximum mean discrepancy (CMMD) loss **304e1**

Determining the source projected data and the target projected data, from (i) the labeled source domain data and the source projection matrix, and (ii) the unlabeled target domain data and the target projection matrix, respectively **304e2**

Augmenting the source projected data and the target projected data, to construct the joint graph, using the Gaussian kernel **304e3**

Learning the probabilistic target domain label corresponding to each target domain feature present in each unlabeled target domain sample, through label propagation over the joint graph , using the source domain label corresponding to the source domain feature present in each labeled source domain sample, by minimizing the graph total variation (GTV) loss **304e4**; and wherein the convergence criterion is when the GTV loss being less than an empirically determined threshold value, to obtain (i) the learnt source projection matrix, (ii) the learnt target projection matrix, and (iii) the learnt probabilistic target domain label corresponding to each target domain feature present in each unlabeled target domain sample

Determine a target domain label corresponding to each target domain feature present in each unlabeled target domain sample, from the learnt probabilistic target domain label corresponding to each target domain feature present in each unlabeled target domain sample **306**

FIG. 3B